# EUROPÄISCHE PATENTSCHRIFT

(11) **EP 1 666 294 B1**
(45) Veröffentlichungstag und Bekanntmachung des Hinweises auf die Patenterteilung: **19.01.2011**
(21) Anmeldenummer: 05025963.9
(22) Anmeldetag: 29.11.2005
(51) Int. Cl.: B60J 7/14

(54) **Kraftfahrzeug mit zumindest einem absenkbaren Dachteil**
Vehicle with at least one retractable roof part
Véhicule avec au moins une partie escamotable de toit

(30) Priorität: 01.12.2004 DE 102004057898
(43) Veröffentlichungstag der Anmeldung: 07.06.2006
(73) Patentinhaber: Wilhelm Karmann GmbH, 49084 Osnabrück (DE)
(72) Erfinder: Bunsmann, Winfried, 49143 Bissendorf (DE); Weissmüller, Olaf, 49565 Bramsche (DE)
(74) Vertreter: Kronthaler, Schmidt & Coll.

(56) Entgegenhaltungen:
- EP-A- 0 857 597
- WO-A-2004/037583
- DE-C1- 4 431 656
- DE-U1- 29 620 468
- JP-A- 59 048 230
- US-A1- 2002 060 471

## Beschreibung

Die Erfindung betrifft ein Kraftfahrzeug mit zumindest einem ersten, im geschlossenen Zustand im wesentlichen horizontal oberhalb eines Innenraums liegenden und an einem seitlichen Gestänge beweglich gehaltenen Dachteil nach dem Oberbegriff des Anspruchs 1 oder des Anspruchs 7 sowie ein Kraftfahrzeug nach dem Oberbegriff des Anspruchs 12.

Es ist bekannt, Kraftfahrzeuge mit mehreren hintereinander liegenden und beispielsweise in sich starren beweglichen Dachteilen zu versehen.

(Siehe z.B. EP 0850792).

Die DE 44 31 656 C1 zeigt ein Fahrzeug mit zwei hintereinander liegenden Dachteilen, die zu ihrer Öffnung gegeneinander einschwenkbar sind. Das hintere der beiden Dachteile weist hierfür über seitliche Gestänge eine Karosserieanbindung über ein Gestänge auf, das um eine Fahrzeugquerachse schwenkbar ist. Bei dieser Schwenkbewegung wird das vordere Dachteil, das seinerseits über eine Gestänge mit lediglich Führungsfunktion an der Karosserie beweglich angebunden ist, mitgenommen. Durch die Anbindung beider Dachteile über eigene Gestänge ist im Bereich der Seitenverkleidungen der Raumbedarf erheblich.

Es ist weiterhin bekannt, dem vorderen der beiden Dachteile keine eigene Gestängeanbindung zuzuordnen. Dann ist jedoch um das Hauptlager des hinteren Dachteils ein erhebliches Drehmoment aufzubringen, um auch das weit von der Drehachse entfernt liegenden vordere Dachende zu bewegen. Die Gestängeteile sind entsprechend verstärkt auszuführen, was wiederum mit Nachteilen für Gewicht und Raumbedarf verbunden ist.

Die US 2003/0201658 A1 zeigt ein Cabriolet-Fahrzeug, bei dem ein hinterer, eine Heckscheibe umfassender starrer Dachteil an einen mittleren Dachteil angehängt und gegenüber diesem bei der Dachöffnung einschwenkbar ist. Eine solche Lösung erfordert aufgrund der Größe des hinteren Dachteils und der schweren Heckscheibe eine großzügige Dimensionierung der das mittlere Dachteil bewegenden Antriebs- und Gestängeteile, so daß diese bei geschlossenem Dach den Raum für die (hinteren) Insassen erheblich einschränken und zudem den Schwerpunkt des Fahrzeugs unerwünscht nach oben verlagern. Das Gestänge selbst muß wegen der Kopfraumeinschränkung in geschlossener Dachstellung parallel zum hinteren Dachteil liegen, so daß auch hier ein großes Drehmoment aufzubringen ist, um das Dach mit der von der Gestängeanbindung an der Karosserie weit nach vorne ausgreifenden Dachspitze zu verlagern.

Der Erfindung liegt das Problem zugrunde, bei einem gattungsgemäßen Kraftfahrzeug eine möglichst raumsparende Anbindung der Dachteile zu ermöglichen.

Die Erfindung löst dieses Problem durch ein Kraftfahrzeug mit den Merkmalen des Anspruchs 1 bzw. des Anspruchs 7, die einzeln oder in Kombination miteinander ausgebildet sein können, sowie durch ein Kraftfahrzeug mit den Merkmalen des Anspruchs 12. Hinsichtlich vorteilhafter Ausgestaltungen und Weiterbildungen der Erfindung wird auf die weiteren Ansprüchen 2 bis 6, 8 bis 11 und 13 verwiesen.

Erfindungsgemäß kann in der Ausbildung nach Anspruch 1 dadurch, daß das weitere absenkbare Dachteil ebenfalls in seinem geschlossenen Zustand horizontal oder nur gering geneigt liegt und heckwärts an dieses ein unbeweglicher, karosseriefester Dachbereich mit einer beweglichen Heckklappe anschließt, der weitere absenkbare Dachteil selbst sehr leicht ausgebildet sein, so daß auch das Dachgestänge und der erforderliche Antrieb in Ausmaß und Gewicht minimiert werden können, was der Sicherheit und dem Raumgefühl der Insassen gerade in deren Kopfhöhe erheblich zugute kommt.

In seiner geschlossenen Stellung kann das weitere absenkbare Dachteil zudem an dem festen Karosseriebereich sicher verriegelt werden, was ebenfalls ohne Gestängeaufwand möglich ist. Zudem ist bei solchen Fahrzeugtypen, die neben der erfindungsgemäßen Ausbildung auch noch in einer üblichen geschlossenen Version lieferbar sind, der Umbauaufwand auf die zu öffnende Version minimiert, was einen erheblichen Vorteil der Erfindung darstellt. Der gesamte hintere Karosseriebereich kann vom geschlossenen Fahrzeug übernommen werden. Insbesondere kann auch eine große Heckklappe unverändert bleiben.

Das Trägheitsmoment ist durch den nur geringen Abstand der Masse der Teile von der jeweiligen Drehachse klein, und ein weiterer separater Antrieb, etwa um ein Heckdachteil zu bewegen, ist entbehrlich.

Eine schwere gläserne Heckscheibe muß nicht mit dem Dach bewegt werden. Die Dachteile können als Leichtbauteile, zum Beispiel auch aus Kunststoff, ausgebildet werden.

Das weitere absenkbare Dachteil ist nur gering gewölbt und kann sehr flach im Fahrzeug abgelegt werden.

Ein sicherheitssteigerndes Untergreifen des belassenen festen Karosseriebereichs von einem Überrollbügel ist ebenfalls konstruktiv einfach möglich. Auch dies führt zu einer Verringerung der mechanischen Anforderungen an die zu bewegenden Dachteile und unterstützen deren Leichtbaueignung.

Sofern zumindest der Beginn der Absenkbewegung des weiteren absenkbaren Dachteils während der noch geschlossenen Stellung des ersten Dachteils ermöglicht ist, sind die auf das Gestänge wirkenden Kräfte weiter verringert, so daß dieses optisch filigran ausgeführt werden kann.

Weiter kann insbesondere der zu seiner Öffnung verlagerte weitere absenkbare Dachteil an der Baueinheit verriegelbar sein, so daß zumindest bei fortschreitender Absenkung des ersten Dachteils dann eine gemeinsame Einheit zu bewegen ist.

Eine Anbindung des seiner Aufhängung an der Baueinheit abgewandten Endes des weiteren Dachteils zum Beispiel an der Karosserie ist dann entbehrlich, was ebenfalls die Konstruktion vereinfacht und das Gewicht verringert.

Das Gestänge der Baueinheit kann in Ausbildung des Anspruchs 7 im Bereich der B-Säule im mittleren Bereich zwischen den Dachteilen liegen. Dadurch ist das aufzubringende Drehmoment zur Bewegung der Dachteile gering, auch die Dachspitze liegt nahe an dem Gestänge, so daß ihr Trägheitsmoment deutlich vermindert ist. Das Gestänge mit seinen Antrieben kann daher besonders klein dimensioniert sein. Es wird nur wenig Kraft zur Dachbewegung benötigt. Die Anordnung ist zudem optisch vorteilhaft, das Gestänge ist an der B-Säule einfach zu verkleiden.

Insbesondere kann ein äußeres Gestängeteil im Querschnitt L-förmig ausgebildet sein und in dem Raum zwischen den Schenkeln ein inneres Gestängeteil in geschlossener Stellung von der Seite verdeckt aufnehmen.

Eine Ablage der Dachteile oberhalb einer Rückbank des Fahrzeugs, wobei die Rückbank bei geöffneten Dachteilen in Originalorientierung verbleibt und lediglich eine Sitzlehne zur Freigabe eines Aufnahmeraums für die Dachteile vorzuklappen ist, vereinfacht die Dachöffnung und bietet insbesondere die Möglichkeit, preisgünstige Fahrzeuge anzubieten, bei denen zum Beispiel die Rücklehne manuell umgelegt werden muß, ohne daß dabei ein Zusatzaufwand auch für ein Umlegen der Rückbank erforderlich wäre.

Weitere Vorteile und Merkmale der Erfindung ergeben sich aus in der Zeichnung schematisch dargestellten und nachfolgend beschriebenen Ausführungsbeispielen des Gegenstandes der Erfindung.

In der Zeichnung zeigt:
- Fig. 1: eine schematische Seitenansicht eines erfindungsgemäßen Kraftfahrzeugs bei geschlossenen Dachteilen,
- Fig. 2: eine ähnliche Ansicht wie Fig. 1 bei noch geschlossenen Dachteilen, jedoch bereits umgeklappter Rücksitzlehne und bereits geöffneten Seitenscheiben,
- Fig. 3: eine ähnliche Ansicht wie Fig. 2 während des Einschwenkens des weiteren Dachteiles gegenüber der den vorderen Dachteil tragenden Baueinheit,
- Fig. 4: eine ähnliche Ansicht wie Fig. 3 bei geöffnetem und an der vorderen Baueinheit verriegeltem weiterem Dachteil,
- Fig. 5: eine ähnliche Ansicht wie Fig. 4 bei beginnender Öffnung auch des ersten Dachteils,

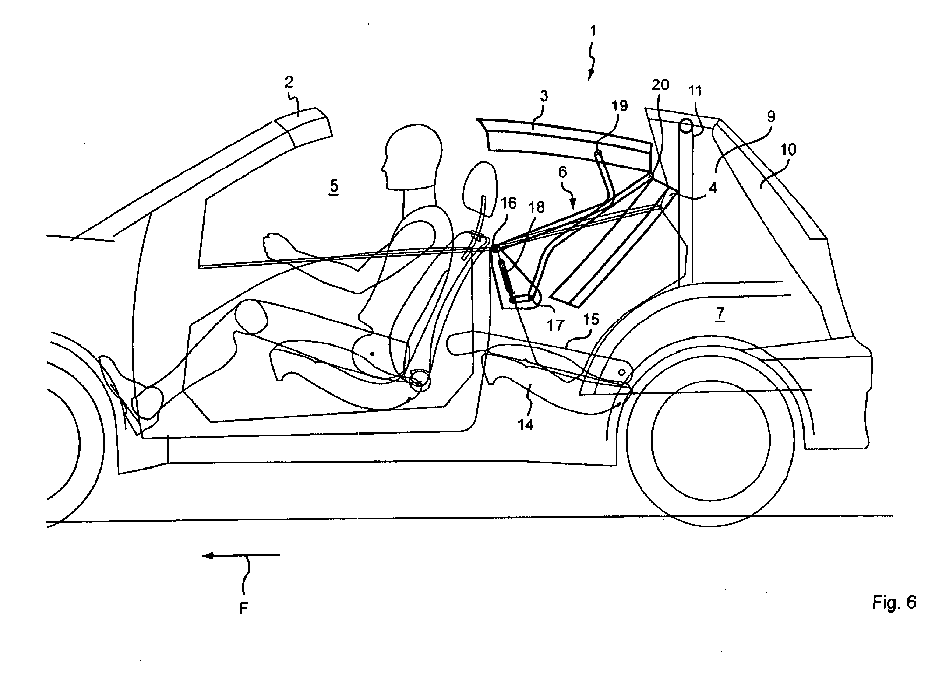

- Fig. 6: eine ähnliche Ansicht wie Fig. 5 während des weiteren Aufschwenkens des ersten Dachteils und des daran angehängten weiteren Dachteils,
- Fig. 7: eine ähnliche Ansicht wie Fig. 6 am Ende des Aufschwenkens der Dachteile.

Das in der Zeichnung dargestellte Kraftfahrzeug 1 ist beispielhaft mit einer Rückbank versehen und bildet im geschlossenen Zustand ein vier- oder mehrsitziges Fahrzeug aus.

Es weist einen ersten beweglichen und hier in geschlossener Stellung mittelbar oder unmittelbar an einen Windschutzscheibenrahmen 2 anschließenden Dachteil 3 sowie einen heckwärts folgenden weiteren Dachteil 4 auf. Beide Dachteile 3, 4 können mit zumindest jeweils einem starren Rahmen versehen sein oder feste Plattenteile ausbilden, wobei in dem ersten Dachteil 3 auch ein Schiebedach enthalten sein kann (nicht gezeichnet), das über oder unter den hinteren Dachteil 4 geschoben werden kann. Für ein gutes Raumgefühl auch im geschlossenen Zustand können die Dachteile 3, 4 zumindest im wesentlichen transparent ausgebildet sein. Auch eine Außenfläche aus Metallblech oder Kunststoff ist natürlich möglich.

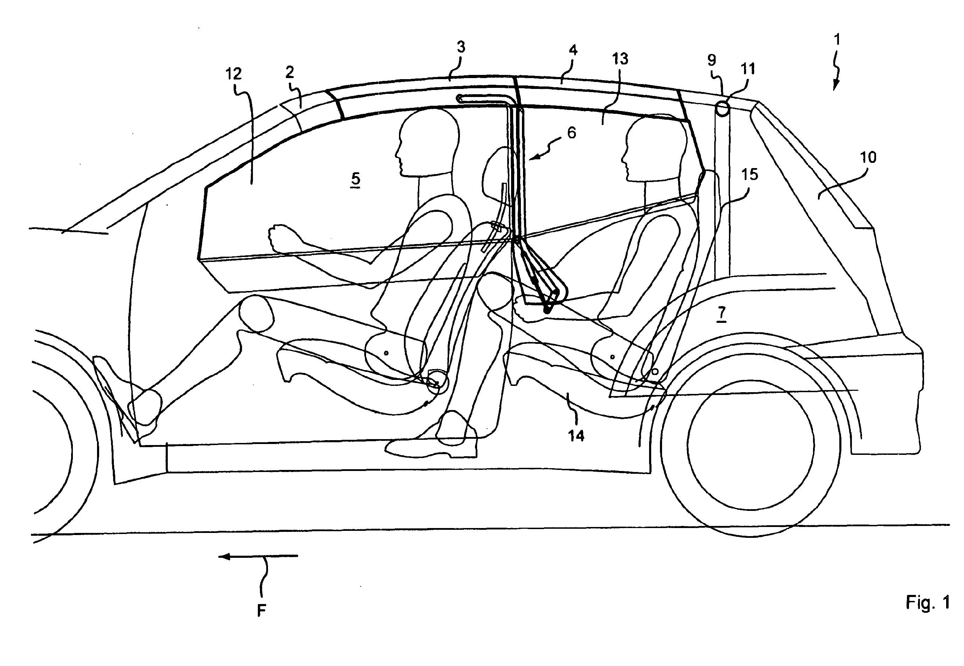

Im gezeichneten Ausführungsbeispiel liegen die Dachteile 3, 4 in geschlossener Stellung (Fig. 1) im wesentlichen horizontal oder nur gering geneigt oberhalb eines Fahrzeuginnenraums 5.

Die hier genau zwei Dachteile 3, 4 können manuell oder voll- oder teilautomatisch zu bewegen sein. Es können zudem weitere Dachteile mit einem oder beiden Dachteilen 3, 4 verbunden und eventuell gegenüber diesen relativbeweglich sein.

Der erste Dachteil 3 ist an einem seitlichen Gestänge 6 gegenüber der Karosserie 7 gehalten, der weitere absenkbare Dachteil 4 ist an die das Gestänge 6 und den Dachteil 3 umfassende Baueinheit im oberen Bereich relativbeweglich angehängt und zu seiner Öffnung um die quer zum Fahrzeug 1 verlaufende Achse 7 in Richtung des Pfeils 8 nach unten einschwenkbar. Das Gestänge 6 steht bei geschlossenem Dach etwa mittig zwischen den beiden Dachteilen 3, 4 im Bereich der B-Säule zumindest nahezu senkrecht, wodurch sich minimierte Trägheitsmomente der Dachteile 3, 4 für ihr Schließen oder Öffnen ergeben und somit nur sehr wenig Kraft für ihre Bewegung erforderlich ist. Durch die Senkrechtstellung des Gestänges 6 wirkt die Gewichtskraft der Dachteile 3, 4 zudem nicht einseitig belastend auf dieses - anders als bei einer Schrägstellung parallel zur Heckscheibe, wie dies aus dem Stand der Technik bekannt ist.

Heckwärts des weiteren absenkbaren Dachteils 4 schließt im gezeichneten Ausführungsbeispiel an diesen ein karosseriefester Dachbereich 9 mit einer beweglichen, hier eine Heckscheibe umfassenden Heckklappe 10 an. Damit kann das hintere Dachteil 4 sehr leicht ausgebildet sein. Durch die nur minimale Wölbung des Dachteils 4 ergibt sich auch ein minimiertes Packmaß, so daß das abgelegte Paket aus Dachteilen 3, 4 sehr flach im Fahrzeug 1 untergebracht werden kann. Der feste Karosseriebereich 9 kann ohne Umarbeitung von einem vollständig geschlossenen Fahrzeugtyp der entsprechenden Serie übernommen sein, was den Kostenaufwand zur Konstruktion und Erstellung des erfindungsgemäßen, zu öffnenden Fahrzeugs erheblich verringert.

Ein Überrollbügel 11 kann als zusätzliches Element den karosseriefesten Bereich 9 untergreifen und seitlich von der C-Säule optisch überdeckt werden. Alternativ kann auch der Überrollschutz durch Verstärkung dieses Bereichs ohne gesonderten Bügel oder dergleichen ausgebildet sein.

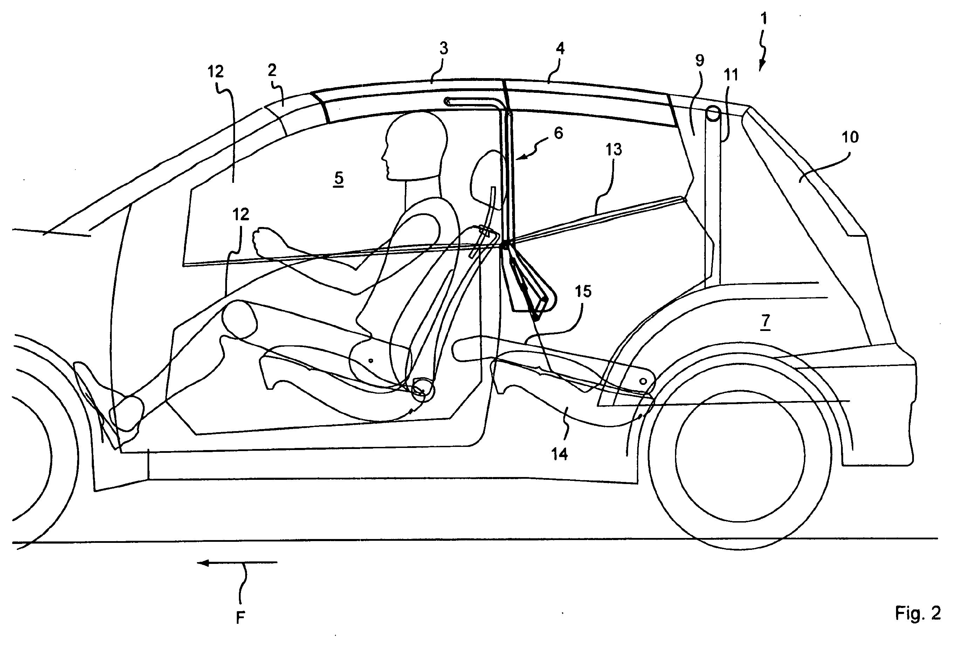

Die Dachteile 3, 4 erstrecken sich in Fahrzeugquerrichtung bis zu den Oberkanten von versenkbaren Seitenscheiben 12, 13, die für eine Öffnung der Dachteile 3, 4 zumindest im wesentlichen abgesenkt sein müssen (Fig. 2 ff.).

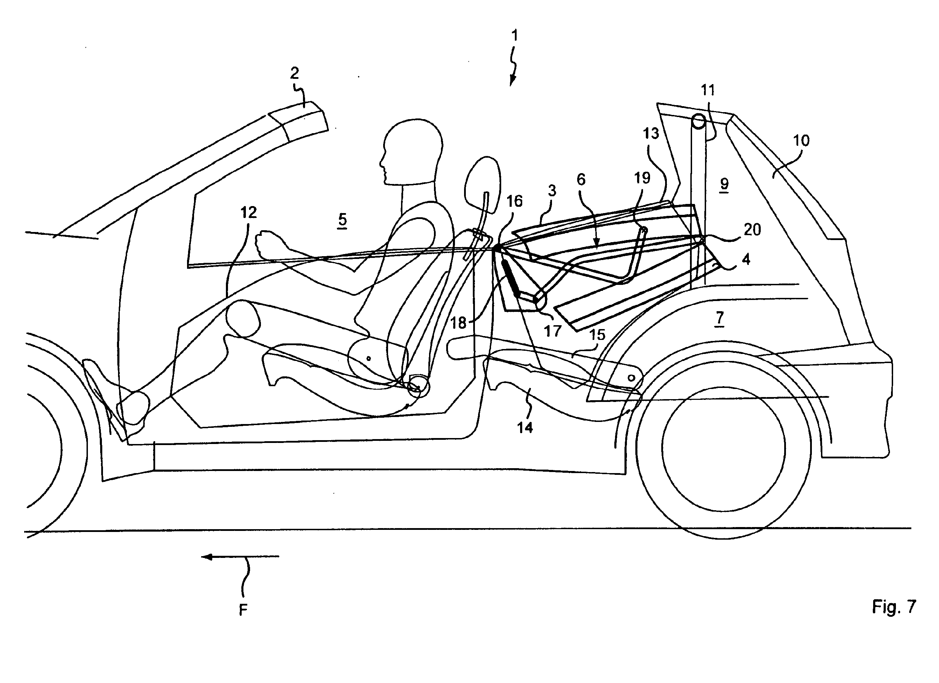

Im geöffneten Zustand der Dachteile 3, 4 sind diese oberhalb einer Rückbank 14 des Fahrzeugs 1 ablegbar (Fig. 7), wobei die Rückbank 14 bei geöffneten Dachteilen 3, 4 in Originalorientierung verbleibt und lediglich eine Sitzlehne 15 zur Freigabe eines Aufnahmeraums für die Dachteile vorzuklappen ist, wie dies in Fig. 2 als Vorbereitung der Öffnung der Dachteile dargestellt ist. Das Umklappen der Sitzlehne 15 kann manuell erfolgen, wobei der abgeklappte Zustand über einen Mikroschalter oder dergleichen Sicherungsabfrage vor Absenkung der Dachteile 3, 4 gewährleistet sein kann.

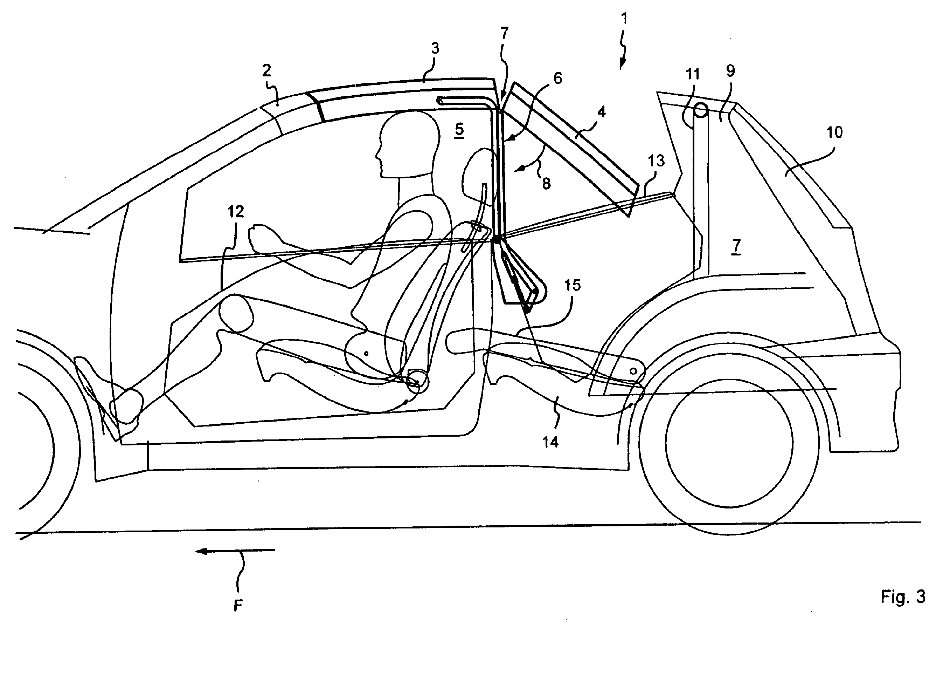

Zur Öffnung der Dachteile 3, 4 nach Absenkung der Seitenscheiben 12, 13 und Umklappen der Rücksitzlehne(n) 15 wird zunächst der weitere Dachteil 4 von dem festen Karosseriebereich 9 entriegelt und kann nachfolgend noch während der geschlossenen Stellung des ersten Dachteils 3 in Richtung des Pfeils 8 um die Achse 7 abwärts verschwenkt werden (Fig. 3). Das seiner Aufhängung 7 an der Baueinheit abgewandte Ende des weiteren Dachteils 4 kann dabei ohne weitere Anbindung an die Karosserie 7 oder Führungskulissen oder ähnliche Hilfsmittel frei beweglich sein. Die Bewegung des Dachteils 4 wird hier durch die vordere Baueinheit bewirkt, insbesondere durch einen Drehantrieb oder Gestängeteile.

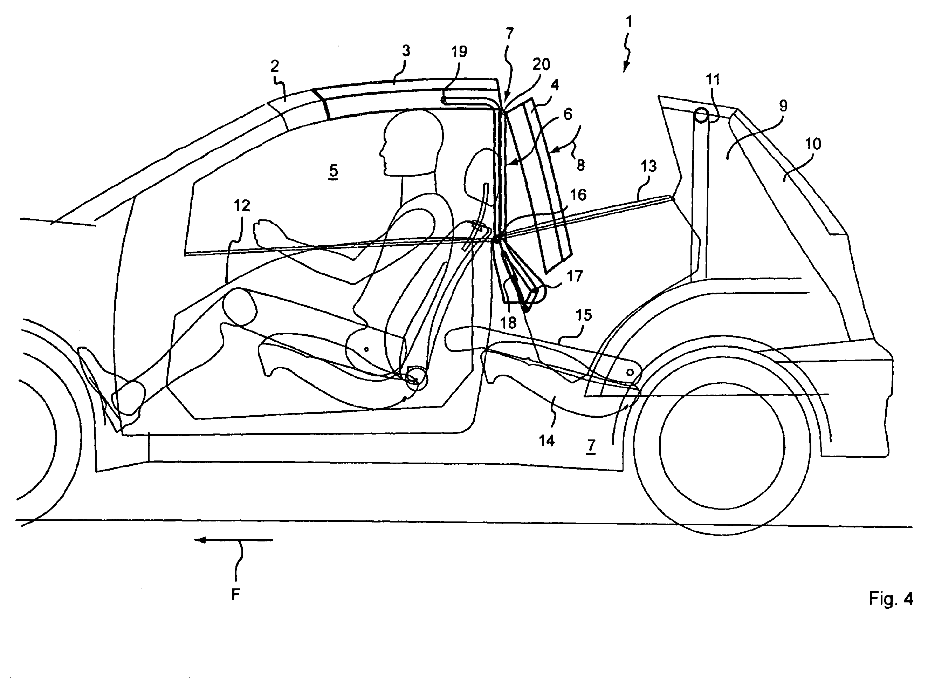

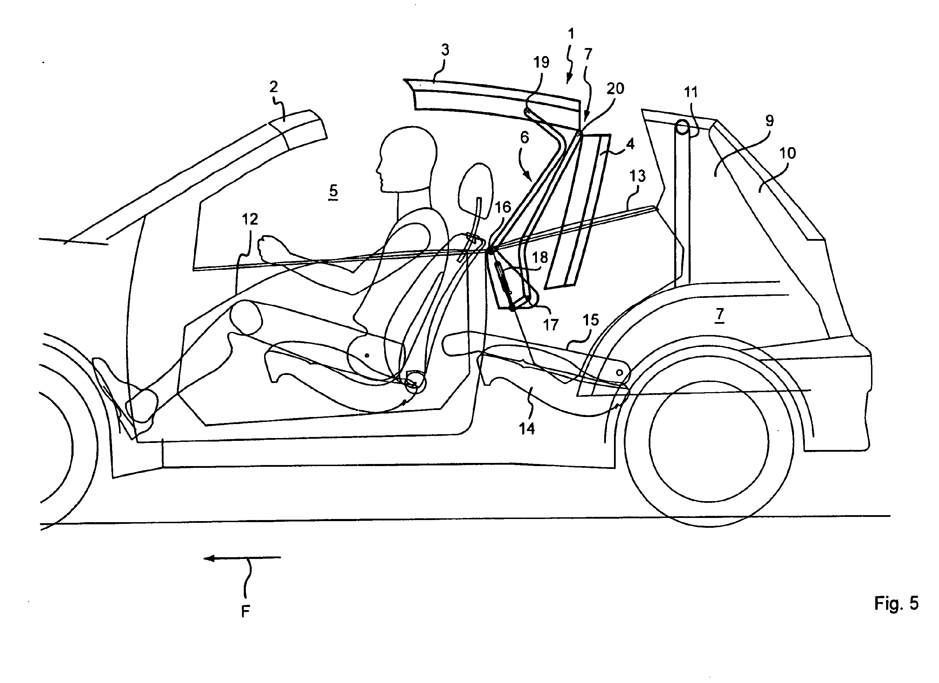

Im gezeichneten Ablauf wird die Relativschwenkbewegung des weiteren Dachteils 4 gegenüber dem ersten Dachteil 3 erst vollständig beendet (Fig. 4), ehe auch dieser geöffnet wird (Fig. 5 ff.). Dieser Ablauf ist jedoch nicht zwingend, sondern beide Bewegungen können auch zumindest teilweise parallel ablaufen, so daß der erste Dachteil 3 schon während des Einschwenkens 8 des weiteren Dachteils 4 abwärts und heckwärts verlagerbar wäre. Vorteilhaft ist in jedem Fall, wenn zunächst der hintere Dachteil 4 vom Karosseriebereich 9 entriegelt und etwas abwärtsgeschwenkt wird, um eine Kollision zwischen den genannten Teilen zuverlässig ausschließen zu können. Am Ende seiner öffnenden Schwenkbewegung 8 ist der weitere Dachteil 4 an der Baueinheit verriegelbar, was hier in der Stellung nach Fig. 4 erreicht ist. Bei der weiteren Dachteilöffnung findet dann keine Relativbewegung mehr zwischen dem Dachteil 4 und dem dieses haltenden Teil des Gestänges 6 statt, wohl aber kann der vordere Dachteil 3 noch gegenüber dem Gestänge 6 einschwenken.

Im weiteren wird (Fig. 5 ff.) das bei geschlossenem erstem Dachteil 3 im Bereich der B-Säule liegende Gestänge 6 der Baueinheit um quer zum Fahrzeug 1 liegende und karosseriefeste Achsen 16, 17 durch Einziehen eines Antriebsorgans 18 eingeschwenkt und nimmt den weiteren Dachteil 4 dabei mit in eine gegenüber seiner Ausgangslage gewendete Stellung, während der erste Dachteil in seiner Ausgangsorientierung verbleibt. Dies ist bewirkt durch das Gestänge 6, das über die karosseriefesten Achsen 16, 17 zusammen mit den am Dachteil 3 angreifenden Achsen 19, 20 hier ein Viergelenk ausbildet. Auch ein Siebengelenk wäre beispielsweise möglich. Ebenso wäre es denkbar, als Gestänge 6 nur einen seitlichen Lenker vorzusehen, wobei dann ein gesonderter Antrieb für eine Schwenkbewegung des vorderen Dachteils 3 um diesen Lenker vorgesehen sein könnte.

In einer weiteren alternativen Ausbildung (nicht gezeichnet) mit einem nur kurzen beweglichen Dachbereich ist nur ein erster beweglicher Dachteil als einziger beweglicher Dachteil vorgesehen, der im geschlossenen Zustand im wesentlichen horizontal oberhalb des Innenraums 5 liegt und zu seiner Öffnung an einem prinzipiell gleichartig ausgebildeten seitlichen Schwenkgestänge 6 gehalten ist. Auch dieses kann bei geschlossenem Dach im wesentlichen vertikal stehen und die Gewichtskraft des Daches somit einfach abfangen. Heckwärts schließt sich dann kein weiterer beweglicher Dachteil 4, sondern direkt ein fester Karosseriebereich an. Der erste und dann einzige bewegliche Dachteil ist dann über das Schwenkgestänge 6 heckwärts und abwärts verlagerbar und mit nach oben weisender Außenseite unterhalb des karosseriefesten Dachbereichs ablegbar. Die Ablagebewegung entspricht der des ersten Dachteils im ersten Ausführungsbeispiel. Auch hier kann der karosseriefeste Dachbereich eine bewegliche, eine Heckfenster umfassende Heckklappe oder bei einer Limousine ein starres Heckfenster und dahinter eine bewegliche Klappe tragen und wiederum zu einer parallelen geschlossenen Version des Fahrzeugs gleichartig ausgebildet sein.

In jedem Fall bleibt bei einem erfindungsgemäßen Fahrzeug der Kofferraum in der Größe entsprechend einem Fahrzeug mit geschlossenem Dach voll erhalten.

Das Gestänge 6 kann sehr einfach und klein dimensioniert ausgeführt werden, es sind maximal zwei relativ kleine Antriebe erforderlich.

## Patentansprüche

1. Kraftfahrzeug (1) mit zumindest einem ersten, im geschlossenen Zustand im wesentlichen horizontal oberhalb eines Fahrzeuginnenraums (5) liegenden und an einem seitlichen Gestänge (6) gegenüber der Karosserie (7) gehaltenen Dachteil (3) sowie mit einem in geschlossener Dachstellung heckwärts daran mittelbar oder unmittelbar anschließenden weiteren absenkbaren Dachteil (4), wobei der weitere absenkbare Dachteil (4) an eine den ersten Dachteil (3) umfassende Baueinheit relativbeweglich angehängt ist,
**dadurch gekennzeichnet,**
**daß** der weitere absenkbare Dachteil (4) ebenfalls in seinem geschlossenen Zustand horizontal oder nur gering geneigt liegt und heckwärts an diesen ein karosseriefester Dachbereich (9) mit einer beweglichen Heckklappe (10) anschließt.

2. Kraftfahrzeug (1) nach Anspruch 1,
**dadurch gekennzeichnet,**
**daß** der feste Dachbereich (9) von einem Überrollbügel (11) untergriffen ist.

3. Kraftfahrzeug (1) nach einem der Ansprüche 1 oder 2,
**dadurch gekennzeichnet,**
**daß** der weitere absenkbare Dachteil (4) gegenüber der den ersten Dachteil (3) tragenden Baueinheit zu seiner Öffnung nach unten einschwenkbar (8) ist.

4. Kraftfahrzeug (1) nach Anspruch 3,
**dadurch gekennzeichnet,**
**daß** zumindest der Beginn der Absenkbewegung (8) des weiteren absenkbaren Dachteils (4) während der noch geschlossenen Stellung des ersten Dachteils (3) ermöglicht ist.

5. Kraftfahrzeug (1) nach einem der Ansprüche 1 bis 4,
**dadurch gekennzeichnet,**
**daß** der zu seiner Öffnung verlagerte weitere absenkbare Dachteil (4) an der Baueinheit verriegelbar ist

6. Kraftfahrzeug (1) nach einem der Ansprüche 1 bis 5,
**dadurch gekennzeichnet,**
**daß** das seiner Aufhängung (7) an der Baueinheit abgewandte Ende des weiteren Dachteils (4) ohne weitere Anbindung frei beweglich ist.

7. Kraftfahrzeug (1) nach einem der Ansprüche 1 bis 6,
**dadurch gekennzeichnet,**
**daß** das Gestänge (6) der Baueinheit bei geschlossenem Dach im Bereich der B-Säule liegt.

8. Kraftfahrzeug (1) nach Anspruch 7,
**dadurch gekennzeichnet,**
**daß** das Gestänge (6) ein um quer zum Fahrzeug liegende Achsen (16;17;19;20) schwenkbares Viergelenk ausbildet.

9. Kraftfahrzeug (1) nach einem der Ansprüche 1 bis 8,
**dadurch gekennzeichnet,**
**daß** der erste Dachteil (3) während des Einschwenkens (8) des weiteren absenkbaren Dachteils (4) abwärts und heckwärts verlagerbar ist.

10. Kraftfahrzeug (1) nach einem der Ansprüche 1 bis 9,
**dadurch gekennzeichnet,**
**daß** die Dachteile (3;4) oberhalb einer Rückbank (14) des Fahrzeugs (1) ablegbar sind, wobei die Rückbank (14) bei geöffneten Dachteilen (3;4) in Originalorientierung verbleibt und lediglich eine Sitzlehne (15) zur Freigabe eines Aufnahmeraums für die Dachteile (3;4) vorzuklappen ist.

11. Kraftfahrzeug (1) nach einem der Ansprüche 1 bis 10,
**dadurch gekennzeichnet,**
**daß** die Dachteile (3;4) im wesentlichen transparent ausgebildet sind.

12. Kraftfahrzeug (1) nach Anspruch 1,
**dadurch gekennzeichnet,**
**daß** der Dachteil über das Schwenkgestänge heckwärts und abwärts verlagerbar und mit nach oben weisender Außenseite unterhalb des karosseriefesten Dachbereichs ablegbar ist.

13. Kraftfahrzeug (1) nach Anspruch 12,
**dadurch gekennzeichnet,**
**daß** der karosseriefeste Dachbereich eine bewegliche Heckklappe trägt.

## Claims

1. A vehicle (1) comprising at least one first roof part (3) located substantially horizontally above a passenger compartment (5) in the closed state and supported on a lateral rod assembly (6) relative to the car body (7), and another retractable roof part (4) indirectly or directly adjoining thereto in the closed state of the roof towards a rear side of the vehicle, the other retractable roof part (4) being attached movable relative to a unit comprising the first roof part (3),
**characterized in that**
the other retractable roof part (4) is also positioned horizontally or merely slightly inclined in its closed state, and that a roof portion (9) that is fixed to the body adjoins to the retractable roof part towards a rear side of the vehicle, which roof portion has a movable tailgate (10).

2. The vehicle (1) according to claim 1,
**characterized in that**
the fixed roof portion (9) is gripped from below by a roll-over bar (11).

3. The vehicle (1) according to one of claims 1 or 2,
**characterized in that** the other retractable roof part (4) is pivotable (8) downwards relative to the unit that supports the first roof part (3), in order to be opened.

4. The vehicle (1) according to claim 3,
**characterized in that**
at least the start of the retracting movement (8) of the other retractable roof part (4) is possible while the first roof part (3) is still in its closed position.

5. The vehicle (1) according to one of claims 1 to 4,
**characterized in that**
the other retractable roof part (4), which is displaced in order to be opened, is lockable at the unit.

6. The vehicle (1) according to one of claims 1 to 5,
**characterized in that**
the end of the other roof part (4), which end is remote from its mounting (7) on the unit, is freely movable without any further connection.

7. The vehicle (1) according to one of claims 1 to 6,
**characterized in that**
the rod assembly (6) of the unit is located in the area of the B-pillar when the roof is closed.

8. The vehicle (1) according to claim 7,
**characterized in that**
the rod assembly (6) forms a four-bar joint that is pivotable around axes (16; 17; 19; 20) that are positioned transverse to the vehicle.

9. The vehicle (1) according to one of claims 1 to 8,
**characterized in that**
the first roof part (3) is displaceable downwards and rearwards, while the other retractable roof part (4) is being pivoted (8).

10. The vehicle (1) according to one of claims 1 to 9,
**characterized in that**
the roof parts (3; 4) are depositable above a rear seat (14) of the vehicle (1), wherein the rear seat (14) remains in its original orientation when the roof parts (3; 4) are opened and only a backrest (15) can be folded forward for uncovering a receiving space for the roof parts (3; 4).

11. The vehicle (1) according to one of claims 1 to 10,
**characterized in that**
the roof parts (3; 4) are substantially formed translucently.

12. The vehicle (1) according to claim 1,
**characterized in that**
the roof part is displaceable rearwards and downwards via the pivoting rods, and depositable below the roof portion that is fixed to the body, with its exterior side facing upwards.

13. The vehicle (1) according to claim 12,
**characterized in that** the roof portion that is fixed to the body supports a movable tailgate..

## Revendications

1. Véhicule automobile (1) comprenant au moins une première partie de toit (3) reposant sensiblement horizontalement au-dessus d'un habitacle de véhicule (5) lorsqu'elle est fermée et maintenue sur une tringlerie latérale (6) par rapport à la carrosserie (7) ainsi qu'une autre partie de toit pouvant être abaissée (4) raccordée directement ou indirectement à celle-ci par l'arrière lorsque le toit se trouve en position fermée, l'autre partie de toit pouvant s'abaisser (4) étant accrochée de façon relativement mobile à une unité modulaire comportant la première partie de toit (3),
**caractérisé en ce que**
l'autre partie de toit pouvant être abaissée (4) repose également horizontalement ou de façon légèrement inclinée lorsqu'elle est fermée et une zone de toit (9) solidaire de la carrosserie comprenant un hayon mobile (10) est raccordée à celle-ci par l'arrière.

2. Véhicule automobile (1) selon la revendication 1,
**caractérisé en ce que**
un arceau de sécurité (11) entre en prise avec le dessous de la zone de toit fixe (9).

3. Véhicule automobile (1) selon l'une quelconque des revendications 1 ou 2,
**caractérisé en ce que**
l'autre partie de toit pouvant être abaissée (4) peut rentrer par pivotement vers le bas (8) en direction de son ouverture par rapport à l'unité modulaire portant la première partie de toit (3).

4. Véhicule automobile (1) selon la revendication 3,
**caractérisé en ce que**
au moins le début du déplacement d'abaissement (8) de l'autre partie de toit pouvant être abaissée (4) est autorisée alors que la première partie de toit (3) est encore en position fermée.

5. Véhicule automobile (1) selon l'une quelconque des revendications 1 à 4,
**caractérisé en ce que**
la partie de toit pouvant être abaissée (4) décalée par rapport à son ouverture peut être verrouillée sur l'unité modulaire.

6. Véhicule automobile (1) selon l'une quelconque des revendications 1 à 5,
**caractérisé en ce que**
l'extrémité de l'autre partie de toit (4) opposée à sa suspension (7) sur l'unité modulaire peut se déplacer librement sans autre moyen de rattachement.

7. Véhicule automobile (1) selon l'une quelconque des revendications 1 à 6,
**caractérisé en ce que**
la tringlerie (6) de l'unité modulaire se situe dans la zone du montant B lorsque le toit est fermé.

8. Véhicule automobile (1) selon la revendication 7,
**caractérisé en ce que**
la tringlerie (6) forme un quadrilatère articulé pouvant pivoter autour d'axes (16 ; 17 ; 19 ; 20) transversaux au véhicule.

9. Véhicule automobile (1) selon l'une quelconque des revendications 1 à 8,
**caractérisé en ce que**
la première partie de toit (3) peut être déplacée vers le bas et vers l'arrière pendant le pivotement rentrant (8) de l'autre partie de toit pouvant être abaissée (4).

10. Véhicule automobile (1) selon l'une quelconque des revendications 1 à 9,
**caractérisé en ce que**
les parties de toit (3 ; 4) peuvent être rangées au-dessus d'une banquette arrière (14) du véhicule (1), la banquette arrière (14) demeurant dans son orientation initiale lorsque les parties de toit (3 ; 4) sont ouvertes et seul un dossier (15) nécessitant d'être préalablement rabattu pour libérer un espace de réception pour les parties de toit (3 ; 4).

11. Véhicule automobile (1) selon l'une quelconque des revendications 1 à 10,
**caractérisé en ce que**
les parties de toit (3 ; 4) sont conçues de façon sensiblement transparente.

12. Véhicule automobile (1) selon la revendication 1,
**caractérisé en ce que**
la partie de toit peut être déplacée vers l'arrière et vers le bas par l'intermédiaire de la tringlerie pivotante et peut être rangée sous la zone de toit solidaire de la carrosserie avec sa face extérieure tournée vers le haut.

13. Véhicule automobile (1) selon la revendication 12,
**caractérisé en ce que**
la zone de toit solidaire de la carrosserie porte un hayon mobile.
